Europäisches Patentamt

European Patent Office

Office européen des brevets

(19)

(11) **EP 1 523 835 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(21) Anmeldenummer: 03732576.8

(22) Anmeldetag: **16.06.2003**

(51) Int Cl.:
*H04L 12/56* *(2006.01)*

(86) Internationale Anmeldenummer:
**PCT/EP2003/006333**

(87) Internationale Veröffentlichungsnummer:
**WO 2004/002082 (31.12.2003 Gazette 2004/01)**

(54) **VERFAHREN UND KOMMUNIKATIONSSTATION ZUM BERTRAGEN VON DATEN**

METHOD AND COMMUNICATION STATION FOR TRANSMITTING DATA

PROCEDE ET STATION DE COMMUNICATION POUR TRANSMETTRE DES DONNEES

(84) Benannte Vertragsstaaten:
**AT BE BG CH CY CZ DE DK EE ES FI FR GB GR HU IE IT LI LU MC NL PT RO SE SI SK TR**

(30) Priorität: **21.06.2002 EP 02013827**
**21.06.2002 DE 10227852**

(43) Veröffentlichungstag der Anmeldung:
**20.04.2005 Patentblatt 2005/16**

(73) Patentinhaber: **SIEMENS AKTIENGESELLSCHAFT**
**80333 München (DE)**

(72) Erfinder:
• **EICHINGER, Josef**
**85464 Neufinsing (DE)**
• **GIEBEL, Tobias**
**21075 Hamburg (DE)**
• **LAMPE, Matthias**
**21073 Hamburg (DE)**
• **ROHLING, Hermann**
**21073 Hamburg (DE)**
• **SCHULZ, Egon**
**80993 München (DE)**
• **ZIRWAS, Wolfgang**
**82194 Gröbenzell (DE)**

(56) Entgegenhaltungen:
**EP-A- 0 851 632** **WO-A-00/74306**
**WO-A-01/15374** **US-A- 4 882 765**

• **DUBE R ET AL: "SIGNAL STABILITY-BASED ADAPTIVE ROUTING (SSA) FOR AD HOC MOBILE NETWORKS" IEEE PERSONAL COMMUNICATIONS, IEEE COMMUNICATIONS SOCIETY, US, Bd. 4, Nr. 1, 1. Februar 1997 (1997-02-01), Seiten 36-45, XP000679252 ISSN: 1070-9916**

**Beschreibung**

Die Erfindung bezieht sich auf ein Verfahren zum fehlerüberwachten Übertragen von Daten über parallele Schnittstellen eines Mehrsprung-Kommunikationssystems mit den oberbegrifflichen Merkmalen der Patentansprüche 1 und 2, sowie auf entsprechende Kommunikationssysteme.

In Mehrsprung-Kommunikationssystemen, die auch als Multi-Hop-Kommunikationssysteme bezeichnet werden, werden Daten von einer sendenden Station aus zu einer letztendlich empfangenden Station entweder direkt über oder eine Vielzahl zwischengeschalteter Zwischen- bzw. Relaisstationen übertragen. Neben der Übertragung von Daten über eine einzige zwischengeschaltete Relaisstation können die Daten auch über eine Vielzahl in Reihe hintereinander geschaltete Relaisstationen übertragen werden, was auch als Multi-Hop bezeichnet wird. Außerdem können, insbesondere in Gleichwellennetz-(SFN: Single Frequency Network)- Kommunikationssystemen ein und dasselbe Signal und somit ein und dieselben Daten von mehreren Relaisstationen gleichzeitig bzw. gering zeitversetzt empfangen und gemeinsam, dass heißt gleichzeitig oder entsprechend leicht zeitversetzt und auf der gleichen Frequenz direkt an die empfangende Station oder an eine weitere Relaisstation übertragen werden. Dabei können in den Relaisstationen Vorverzerrungs- oder Entzerrungsverfahren eingesetzt werden, um die Leistungsfähigkeit zu steigern. Um eine fehlerfreie Datenübertragung sicher zu stellen, werden aus derartigen oder anderen Kommunikationssystemen für sich bekannte Fehlererkennungs- und Fehlerkorrekturverfahren angewendet, beispielsweise eine automatische Anforderung zur wiederholten Übertragung eines ursprünglichen oder modifizierten Datenpakets (ARQ: Automatic Repeat Request). Bekannt ist auch die Anwendung einer sogenannten zyklischen Redundanzprüfung (CRC: Cyclic Redundancy Check). Diese Verfahren werden dabei für jede einzelne der Übertragungen neu angewendet, also auf jede Übertragung von der sendenden Station zu einer benachbarten Relaisstation, auf jede Übertragung von einer Relaisstation zu einer weiteren Relaisstation und auf jede Übertragung von einer Relaisstation zu der empfangenden Station. Diese Vorgehensweise stellt zwar sicher, dass die Daten über möglichst viele Wege möglichst fehlerfrei zu der empfangenden Station gelangen, nachteilhaft ist aber der hohe damit verbundene Rechen- und Zeitaufwand. Außerdem ist ein hoher Energieverbrauch mit dieser Verfahrensweise verbunden, da einerseits die Entpackung, Dekodierung und Prüfung von empfangenden Daten in den Relaisstationen sowie das Anfordern einer erneuten Übersendung oder das erneute Kodieren und weitersenden Energie verbraucht und letztendlich die wiederholte Übertragung von erneut versandten Datenpaketen ebenfalls Energie verbraucht.

Aus der WO 01/15374 A1 ist ein Verfahren zur Übertragung einer Alarmnachricht bekannt, bei dem, wenn erste Übertragungsmittel außerhalb der Reichweite von Zielempfängermitteln sind, die Nachricht von einer oder mehreren innerhalb der Reichweite befindlichen Sende-/Empfangseinheiten so oft wiederholt übertragen wird, bis der Empfang der Nachricht durch von den Zielempfängermittel durch ein Bestätigungssignal bestätigt wird.

Die US 4 882 765 offenbart ein Verfahren, bei dem eine Repeaterstation autonom eine Nachricht aufgrund einer bestimmten Anzahl von bereits erfolgten wiederholten Übertragungen durch die sendende Station oder aufgrund einer nicht empfangenen Bestätigung von der empfangenen Station nochmals zu der empfangenden Station sendet.

Die WO 00/74306 A2 schließlich offenbart ein System mit einer Anzahl von Knoten, bei dem jeder Knoten eine von einem anderen Knoten empfangene Nachricht zu einem nachfolgenden weiterleitet. Alle Knoten verwenden dabei eine einheitliche Referenzfrequenz.

Die Aufgabe der Erfindung besteht darin, ein Verfahren zum fehlerüberwachten Übertragen von Daten über parallele Schnittstellen eines Mehrsprung-Kommunikationssystems zu verbessern, insbesondere mit Blick auf den Verarbeitungsaufwand des Gesamtsystems zu verbessern, sowie ein Kommunikationssystem zum Durchführen eines solchen Verfahrens vorzuschlagen.

Diese Aufgabe wird durch Verfahren zum fehlerüberwachten Übertragen von Daten über parallele Schnittstellen eines Mehrsprung-Kommunikationssystems mit den Merkmalen der Patentansprüche 1 und 2, sowie durch Kommunikationssysteme mit den Merkmalen der Patentansprüche 10 und 11 gelöst.

Vorteilhafte Ausgestaltungen sind Gegenstand abhängiger Ansprüche.

Dadurch, dass Bestätigungen bzw. Anforderungen für erneute Datenübertragungen nur von der empfangenden Station, dass heißt in der Regel der letzten Station in der Übertragungskette, erzeugt werden, muss auch nur diese Station empfangene Daten auf eine ausreichende Empfangsqualität überwachen. Bei der Erkennung einer ausreichenden Empfangsqualität sendet auch nur diese Station eine derart erzeugte Bestätigung bzw. Anforderung in Richtung der ursprünglich die Daten sendenden Station ab. Die zwischengeschalteten Relaisstationen dienen im einfachsten Fall lediglich zum Weiterleiten empfangener Daten bzw. zum Weiterleiten empfangener Bestätigungen oder Anforderungen. Entsprechend entfällt in diesem einfachen Fall die Überprüfung zur Weiterleitung empfangener Daten in den Relaisstationen, was eine schnellere Weiterleitung und einen geringeren Energieverbrauch ermöglicht.

Eine Relaisstation, welche zur Weiterleitung empfangener Daten auf eine unzureichende Empfangsqualität prüft und die Daten davon abhängig nicht weiterleitet oder weiterleitet bzw. bezüglich dieser Empfangsqualität die Datenverbindung aufrecht erhält oder abschaltet, benötigt zwar Energie und Zeit für die Überprüfung der empfangenen Daten, jedoch wird durch eine unterbundene Weiterleitung und eine unterbundene Anforderung einer erneuten Datenübertragung letztendlich ebenfalls Energie gespart. Dadurch, dass bei einem derartigen Kommunikationssystem die ursprünglich gesendeten Daten über eine Vielzahl paralleler Datenwege übertragen werden, besteht eine ausreichend hohe Wahrscheinlichkeit, dass im Fall des Datenverlustes auf einem Übertragungsweg und der daraufhin erfolgenden Deaktivierung dieses Datenweges trotzdem die ursprünglichen Daten über zumindest einen oder mehrere weitere der parallelen Übertragungswege zu der beabsichtigen Zielstation bzw. empfangenden Station gelangen. Vorteilhaft ist somit ein Kommunikationssystem bzw. eine Verfahrungsweise, bei der die Übertragung der Daten nur über Relaisstationen vorgenommen wird, welche die Daten ausreichend gut bzw. mit ausreichender Fehlerfreiheit empfangen haben.

Während es vorteilhaft ist, wenn eine Relaisstation eigenständig die Entscheidung trifft, ob zur Weiterleitung empfangene Daten eine ausreichende Qualität haben, um weitergeleitet zu werden, ist eine Verfahrensweise besonders vorteilhaft, bei der für die Entscheidungsfindung auch Informationen von Relaisstationen paralleler Übertragungswege berücksichtigt werden. Teilt eine Relaisstation auf einem parallelen Weg mit, dass sie eine Übertragung mit sehr gut bzw. hochqualitativ zur Weiterleitung empfangenen Daten vornehmen kann, muss eine darüber informierte parallele Relaisstation nicht eine zusätzliche Übertragung der möglicherweise sogar schlechter empfangenen Daten vornehmen. Dies gilt insbesondere dann, wenn die parallelen Datenwege einander kreuzen oder von jeder Relaisstation die weitergeleiteten Daten von anderen Relaisstationen in ihren Umfeld empfangen werden können.

Vorteilhafterweise kann eine Vielzahl für sich bekannter Fehlerkorrekturverfahren oder Fehlererkennungsverfahren in den Relaisstationen verwendet werden, wobei diese Verfahren nur zur Erkennung der Qualität der weiterzuleitenden empfangenen Daten verwendet wird, nicht aber zu einer erneuten Anforderung im Falle einer schlechten Empfangsqualität.

Besonders vorteilhaft ist die Anwendung derartiger Verfahren in einem Kommunikationssystem, bei welchem die verschiedenen sendenden und empfangenden Stationen sowie Relaisstationen auf einer einzelnen Frequenz kommunizieren. Diese Bedingungen finden sich insbesondere in dezentral organisierten, dass heißt selbstorganisierenden Kommunikationsnetzen, wie sie für sogenannte Ad-Hoc-Kommunikationssysteme typisch sind.

Vorteilhafterweise werden die über verschiedene parallele Wege zueinander parallel und überlagert empfangenen Daten empfängerseitig in der empfangenen Station überlagert und gemeinsam verarbeitet, um durch statistische Mittelwertbildung und dergleichen eine weitere Qualitätsverbesserung erzielen zu können.

Insbesondere ergibt sich für die bedingungsabhängige Weiterleitung von Daten in Relaisstationen empfängerseitig eine höhere Summendatenrate, d.h. eine erhöhte Reproduktionsqualität dadurch, dass die empfängerseitig empfangenen Daten in der Gesamtheit gemittelt eine bessere Qualität aufweisen.

Eine Kommunikationsstation zum Durchführen eines solchen Verfahrens kann eine sendende Station eine empfangene Station oder eine Relaisstation sein, kann jedoch auch kombiniert zwei oder alle drei der Funktionalitäten aufweisen. Eine solche Kommunikationsstation weist zweckmäßigerweise neben einer Empfangs Sendeeinrichtung auch eine Analyseeinrichtung auf, welche Bestandteil der stationseigenen Steuereinrichtung sein kann und zum Analysieren empfangener Daten bezüglich deren Empfangsqualität ausgelegt ist.

Ein Ausführungsbeispiel und Varianten dazu werden nachfolgend anhand der Zeichnung näher erläutert. Es zeigen:

Fig. 1    schematisch ein Kommunikationssystem mit einer Vielzahl von über parallele Datenverbindungen kommunizierenden Stationen und

Fig. 2    schematisch die verschiedenen Möglichkeiten zur Behandlung von zur Weiterleitung empfangenen Daten in Relaisstationen.

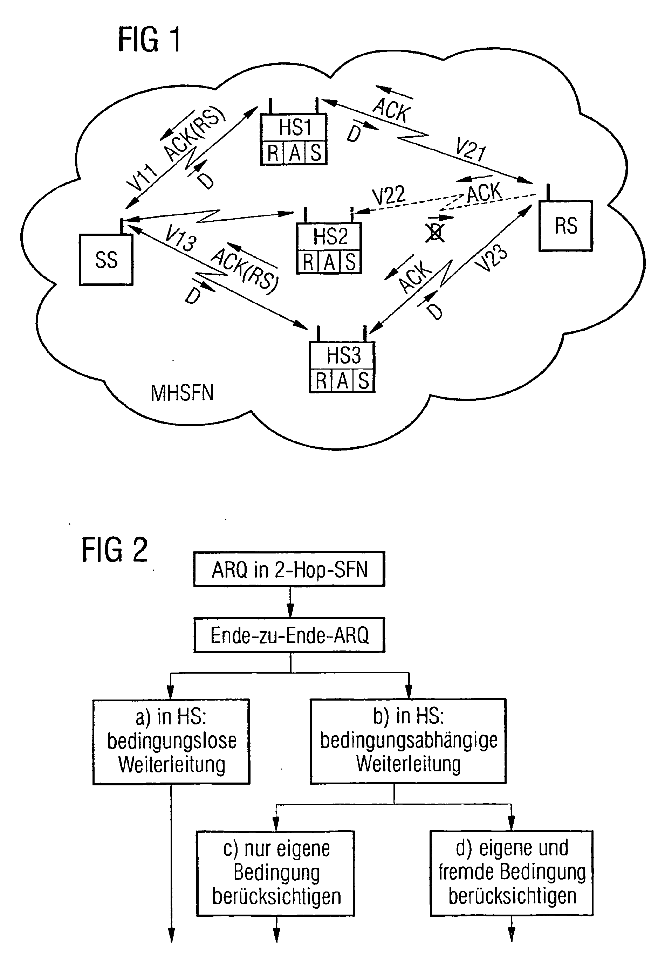

Wie dies aus Fig. 1 ersichtlich ist, weist ein beispielhaftes Kommunikationssystem MHSFN eine Vielzahl miteinander kommunizierender Stationen auf. Als Kommunikationssystem ist beispielhaft ein Mehrsprung- bzw. Multi-Hop(MH)-Kommunikationssystem dargestellt, welches als Gleichwellennetz (SFN: Single Frequency Network) ausgebildet ist. Eine Übertragung auf andere Kommunikationssysteme, insbesondere Ad-hoc- Kommunikationssysteme ist jedoch möglich.

Dargestellt ist eine Situation, bei der eine sendende Station SS Daten D zu einer empfangenden Station RS versendet. Dabei wird die Distanz zwischen der sendenden Station SS und der empfangenden Station RS so groß angenommen, dass eine direkte Übertragung über eine direkte Kommunikationsverbindung zwischen diesen beiden nicht möglich ist. Die sendende Station SS sendet ihre Daten D über eine Vielzahl von Kommunikationsschnittstellen V11, V12, V13 zu verschiedenen zwischengeschalteten Stationen, die zur einfacheren Unterscheidbarkeit nachfolgend als Relaisstationen HS1,HS2,HS3 bezeichnet werden. Die Relaisstationen HS1,HS2,HS3 erkennen beispielsweise an dem Datenkopf (Header) empfangener Datenpakete, dass es sich um weiterzuleitende empfangene Daten D handelt und leiten diese empfangenden Daten D in Richtung der Zielstation, dass heißt der empfangenden Station RS über weitere Kommunikationsschnittstellen V21,V23 weiter. Die Kommunikationsschnittstellen V11,V12,V13,V21,V23 sind vorzugsweise Funkschnittstellen, welche mit der gleichen bzw. einer einzigen Frequenz betrieben werden. Für den Fall, dass die empfangende Station RS sich bereits im Sendebereich der Relaisstationen HS1, HS3 befindet, werden die weiterzuleitenden empfangenen Daten D direkt zu der empfangenden Station RS übertragen. Andernfalls erfolgt die Übertragung über weitere zwischengeschaltete Relaisstationen.

Von der empfangenen Station RS wird nach dem Empfang der Daten D eine Überprüfung vorgenommen, ob diese ausreichend fehlerfrei empfangen wurden. Für die Überprüfung können übliche, für sich bekannte Fehlererkennungs- und Fehlerkorrekturverfahren, z.B. ARQ und/oder CRC verwendet werden. Nach einer solchen Analyse sendet die empfangende Station RS eine Bestätigung ACK über eine ausreichende Empfangsqualität und/oder eine Anforderung zur erneuten Übertragung oder modifizierten Übertragung der ursprünglichen Daten D in Richtung der ursprünglich sendenden Station SS. Die Bestätigung ACK bzw. Anforderung wird wiederum über eine direkte Verbindung oder eine Vielzahl zueinander paralleler Verbindungen V21,V11;V23,V13;V22,V12 unter Zwischenschaltung der Relaisstationen HS1,HS2,HS3 übertragen. Je nach Empfang einer Bestätigung ACK oder einer Anforderung übersendet die sendende Station SS nachfolgend neue Daten D bzw. neue Datenpakete oder veranlasst eine wiederholte und optional modifizierte Übersendung der ursprünglichen Daten.

Vorteilhafterweise werden gemäß einer bevorzugten Ausführungsform in den Relaisstationen HS1,HS2,HS3 zur Weiterleitung empfangene Daten D nicht einfach ungeprüft weitergeleitet sondern vor einer Weiterleitung bezüglich der Empfangsqualität bzw. der Datenqualität überprüft. Stellt eine der Relaisstationen HS2 fest, dass die Datenqualität der zur Weiterleitung empfangenen Daten D nicht ausreicht oder diese Daten D fehlerhaft empfangen worden sind, so baut sie keine Verbindung V22 zur Weiterleitung der empfangenen Daten D auf. Dadurch unterbricht der entsprechende Datenpfad V12,V22, der ursprünglich von der sendenden Station SS über die zweite Relaisstation HS2 zu der empfangenen Station RS eingerichtet wurde. Insbesondere veranlasst die zweite Relaisstation HS2 auch keine erneute Übertragung der ursprünglichen oder modifizierten ursprünglichen Daten D.

In den zwischengeschalteten Relaisstationen HS1-HS3 werden entsprechend neben einer Empfangseinrichtung R und einer Sendeeinrichtung S sowie allgemeiner für den Betrieb erforderlicher Steuereinrichtungen und Speicher auch Einrichtungen und Funktionen für die Überprüfung von zur Weiterleitung empfangenen Daten bereitgestellt. Insbesondere wird dazu eine Analyseeinrichtung A bereitgestellt, welche Bestandteil der zentralen Steuereinrichtung der Relaisstationen HS1-HS3 sein kann.

Weitere Einrichtungen und/oder Funktionen dienen vorteilhafterweise zur Durchführung von Vorverzerrungs- oder Entzerrungsverfahren, durch welche beispielsweise eine konstruktive Überlagerung der Signale an der empfangenden Station RS und optional weiterer zwischengeschalteter Relaisstationen erzielt werden kann. Beispielsweise können für sich bekannte Verfahren wie eine Phasen- oder Equal-Gain, Maximum Ratio- oder eine Auswahl- bzw. Selection-Verzerrung verwendet werden. Möglich sind auch Kombinationen oder Erweiterungen sowie andere Vorverzerrungstechniken.

Gemäß einer weiteren Ausführungsform ist auch eine Kommunikation verschiedener Relaisstationen HS2,HS3 untereinander möglich. Eine Kommunikation findet über eine entsprechende Schnittstelle VH statt, welche bevorzugt als Funkschnittstelle, prinzipiell aber auch als leitungsgebundene Schnittstelle ausgebildet sein kann. Darüber können Informationen bezüglich zur Weiterleitung empfangener Daten D bzw. über deren Empfangsqualität übertragen werden. Dadurch ist es möglich, dass eine dritte Relaisstation HS3 nach einem Empfang von Daten D mit einer sehr guten Empfangsqualität diese Tatsache an eine zweite Relaisstation HS übermitteln kann, welche als parallele Station dieselben Daten D parallel empfangen hat, dies jedoch mit einer schlechteren Empfangsqualität. In einem solchen Fall kann die Relaisstation HS mit der schlechteren Empfangsqualität die Weiterleitung zur Weiterleitung empfangener Daten D unterdrücken, da über einen parallelen Datenpfad SS-HS3-RS die selben Daten D mit besserer Weiterleitungsqualität übertragen werden.

Allgemein kann vor einer Weiterleitung in den Relaisstationen HS1-HS3 eine Datenverarbeitung von zur Weiterleitung empfangenen Daten vorgenommen werden. Die Art der Weiterverarbeitung und der Weiterleitung bzw. Weitersendung kann dabei verschiedenen Kenngrößen unterliegen. Beispielsweise können Signal-zu-Rauschverhältnisse (SNR: Signal to Noise Relation) an den Eingängen der zwischengeschalteten Relaisstationen HS1-HS3 ausgewertet werden. Möglich ist auch die Bestimmung der Anzahl korrigierter Bit in einem Viterbi-Decoder oder die Berücksichtigung des Ergebnisses einer zyklischen Redundanzprüfung CRC. Als Verarbeitungstechniken werden insbesondere Verfahren zur Entzerrung und Verstärkung eines zur Weiterleitung empfangenen Signals ohne eine weitere zusätzliche Demodulation bevorzugt. In Relaisstationen HS1-HS3, in denen eine Überprüfung von zur Weiterleitung empfangenen Daten vorgenommen wird, werden die empfangenen Daten D zweckmäßigerweise demoduliert und decodiert, um die eigentliche Analyse vornehmen zu können. Möglich ist sowohl eine Ausführungsform, bei der die analysierten Daten D bzw. Datenpakete anschließend zur Weiterleitung erneut encodiert und moduliert werden, möglich ist aber auch eine Ausführungsform, bei der die ursprünglich zur Weiterleitung empfangenen Daten D in einem Zwischenspeicher gehalten werden, um unverändert aus dem Zwischenspeicher weitergeleitet werden zu können, falls ein verdoppelter Satz der Daten nach einer Demodulation, Decodierung und Analyse als zur Weiterleitung ausreichend gut befunden wurde. Vorteilhafterweise können Verfahren zur erneuten Übertragung eines fehlerhaft oder unzureichend empfangenen Datenpakets deaktiviert werden, wenn die Daten D empfangende Station nicht die Zielstation sondern nur eine Relaisstation ist.

Im Rahmen der Weitersendung bzw. Weiterleitung ist es neben dem erneuten Kodieren und Modulieren von Daten D bzw. Datenpaketen auch möglich, eine Vorverzerrung vorzunehmen. Insbesondere kann die Weiterleitung eines empfangenen Signals bzw. empfangener Daten D nach einer Entzerrung, Verstärkung und eventuellen Vorverzerrung vorgenommen werden.

Prinzipiell ist eine Anwendung sowohl bei zentralisiert als auch bei dezentral bzw. selbstorganisierend organisierten Netzen möglich. Der Austausch der vorstehend genannten Kenngrößen zwischen einzelnen der Stationen, insbesondere zwischen Relaisstationen auf zueinander parallelen Datenbahnen ist besonders vorteilhaft einsetzbar, wie dies vorstehend ausgeführt ist. Zur Analyse können aber auch lediglich Kenngrößen verwendet werden, die in der eigenen Station verwendet wurden, beispielsweise mittels für sich bekannter Fehlererkennungs- und Fehlerkorrekturverfahren. Die Anwendung eines Fehlerkorrekturverfahrens kann dabei im Fall einer weiterleitenden Relaisstation auf den fehlererkennenden Teil beschränkt bleiben, wobei ein korrigierender Teil nur im Fall einer dazu nicht erforderlichen erneuten Übertragung eingesetzt wird, sofern eine Übertragung der Daten über eine ausreichende Anzahl paralleler Datenverbindungen sichergestellt ist. Selbiges gilt für Fehlererkennungsverfahren, welche im Fall einer Relaisstation vorzugsweise auf die Erkennung des Fehlers beschränkt eingesetzt werden, wobei eine entsprechende Fehlererkennungsmitteilung unterdrückt wird.

Im Fall der Kommunikation zwischen benachbarten Stationen insbesondere Relaisstationen HS2,HS3, kann einerseits nur eine direkte Übertragung eines Analyseergebnisses an benachbarte Stationen vorgenommen werden, möglich ist aber auch eine Verhandlung bzw. Aushandlung der Analyse- bzw. Auswertungsergebnisse zwischen solchen benachbarten Stationen, welche zum Abschluss einer derartigen Verhandlung entscheiden, über welche der verhandelnden Stationen HS3 eine Weiterleitung der Daten vorzunehmen ist.

Fig. 2 dient zur Veranschaulichung verschiedener Varianten des dargestellten Ausführungsbeispiels. Ein Schwerpunkt liegt dabei auf der Organisation des Auswertungsverfahrens. Vereinfachend kann angenommen werden, dass beispielsweise nur eine einzige Kenngröße, die das Ergebnis einer zyklischen Redundanzprüfung ist, verwendet wird. Ferner wird bei dem einfachen Beispiel davon ausgegangen, dass die an den Zwischenstationen bzw. Relaisstationen HS1-HS3 zur Weiterleitung empfangenen Signale vollständig demoduliert und decodiert werden können. Ausgegangen wird dabei von einem Fehlerkorrekturverfahren in einem 2-Hop-SFN-Kommunikationssystem, bei dem die Fehlerkorrektur ARQ Ende- zu -Ende- Verbindung durchgeführt wird. Fehlerkorrekturen, wie sie für die einzelnen Verbindungen für sich bekannt sind, können gemäß dem vorstehend beschriebenen Konzept ausgelassen werden. Die ursprünglich sendende Station SS erhält somit keine Bestätigungen für Daten bzw. Datenpakete, welche von den zwischengeschalteten Relaisstationen HS1-HS3 korrekt empfangen wurden. Es wird entsprechend keine getrennte Absicherung der ersten Sprünge bzw. Hops durchgeführt. Ausschließlich die empfangende Station RS bestätigt korrekt empfangene Pakete, worauf hin Pakete mit einer fehlenden Empfangsbestätigung von der sendenden Station SS bei Fehlen der Bestätigung wiederholt übertragen werden.

Für die zwischengeschalteten Relaisstationen HS gibt es verschiedene Möglichkeiten, die empfangenen Daten D bzw. Datenpakete zu behandeln. Gemäß einer besonders einfachen Ausführungsform a) findet eine bedingungslose Weiterleitung in der Relaisstation HS statt. Dabei kann es vorkommen, dass ein fehlerhaft empfangenes Datenpaket oder ein Signal mit einem schlechten Signal-zu-Rausch-Verhältnis an die empfangende Station RS weitergeleitet wird. Die Auswertung von Kenngrößen oder dergleichen entfällt in diesem Fall.

Bevorzugt wird daher die bedingungsverknüpfte bzw. bedingungsabhängige Weiterleitung b) von empfangenden Daten D. Diese Bedingungen können unabhängig voneinander in einzelnen der verschiedenen parallelen Relaisstationen HS oder mit Hilfe von Informationen aller oder mehrerer untereinander kommunizierender Relaisstationen HS2,HS3 ausgewertet werden. Entsprechend gibt es zwei weitere Varianten. Im einfacheren Fall c) wird nur eine stationsinterne Analyse von zur Weiterleitung empfangenen Daten D vorgenommen. Haben die analysierten Daten eine ausreichende Datenqualität, so wird die Weiterleitung in Richtung der empfangenden Station RS veranlasst. Reicht die Datenqualität nicht aus, so wird die Weiterleitung in Richtung der empfangenen Station RS unterbunden. Vorteilhafterweise kann auch die Rückmeldung von Bestätigungen oder Anforderungen für erneute Übertragungen unterbleiben.

Gemäß der anderen Ausführungsform d) findet die anhand der zweiten und dritten Relaisstation HS2,HS3 beschriebene Kommunikation statt, bei der zumindest eine der Relaisstationen HS2 auf Informationen von zumindest einer anderen der Relaisstationen HS3 zugreift, um eine Entscheidung bezüglich möglicherweise nicht optimal empfangenen Daten D bezüglich deren Weiterleitung zu treffen.

Erstaunlicherweise ist bereits selbst die bedingungslose Weiterleitung a) von Daten D unabhängig von einer Analyse und somit unabhängig von einer ausreichenden oder nicht ausreichenden Empfangsqualität in der Relaisstation HS vorteilhaft. Wird davon ausgegangen, dass alle Datenpfade SS-HS1-RS;SS-HS2-RS;SS-HS3-RS eine etwa gleiche mittlere Paketfehlerrate $PER_0$ haben, so kann die Wahrscheinlichkeit, dass genau n Relaisstationen von insgesamt K parallel zueinander angeordneten Relaisstationen ein gesendetes Datenpaket korrekt empfangen, formuliert werden, wie folgt:

$$p(n) = \binom{K}{n} \cdot (1-PER_0)^n \cdot PER_0^{K-n}.$$

Die mittlere Anzahl der Relaisstationen, welche das Paket bzw. die Daten korrekt empfangen haben und dementsprechend weitersenden, kann berechnet werden wie folgt:

$$E(n) = \sum_{n=0}^{K} n \cdot p(n) \approx (1-PER_0) \cdot K.$$

Während bei der bedingungslosen Weiterleitung alle K Zwischenstationen gemeinsam im SFN-Kommunikationssystem senden, werden im Fall einer bedingungsabhängigen Weiterleitung, also im Fall der Analyse einer Empfangsqualität von empfangenden Daten D in Relaisstationen HS1-HS3 gemäß den bevorzugteren Ausführungsformen, nur Daten D über eine geringere Anzahl von Datenwegen SS-HS1-RS;SS-HS3-RS bei der empfangenden Station RS eintreffen. Damit kann im Fall einer bedingungsabhängigen Weiterleitung die Empfangsleistung bei der empfangenden Station RS vergleichsweise geringer sein, als im Fall einer bedingungslosen Weiterleitung der Daten C durch alle Relaisstationen. Jedoch haben im Fall der teilweise unterdrückten Weiterleitung die bei der empfangenden Station RS empfangenen Daten D eine höhere Datenqualität bzw. ein geringeres Signal-zu-Rausch-Verhältnis, so dass insgesamt eine Verbesserung der Datenqualität zu verzeichnen ist.

**Patentansprüche**

1. Verfahren zum Übertragen von Daten (D) in einem Funk-Kommunikationssystem (MHSFN), bei dem

    - die Daten (D) von einer sendenden Station (SS) zu einer die Daten (D) empfangenden Station (RS) über zumindest zwei die Daten jeweils empfangenden und weiterleitenden Relaisstationen (HS1,HS2,HS) übertragen werden, **dadurch gekennzeichnet, dass**
    - die Daten (D) bei einer unzureichenden Übertragung aufgrund einer empfängerseitigen Anforderung (ACK) von der sendenden Station (SS) erneut übertragen werden, und
    - die Anforderung ausschließlich von der empfangenden Station (RS) erzeugt und zu der sendenden Station (SS) gesendet wird.

2. Verfahren zum Übertragen von Daten (D) in einem FunkKommunikationssystems (MHSFN), bei dem

    - die Daten (D) von einer sendenden Station (SS) zu einer die Daten (D) empfangenden Station (RS) über zumindest zwei die Daten jeweils empfangenden und weiterleitenden Relaisstationen (HS1,HS2,HS) übertragen werden, und
    - die Daten (D) bei einer unzureichenden Übertragung aufgrund eines Ausbleibens einer empfängerseitigen Bestätigung erneut übertragen werden,

    **dadurch gekennzeichnet, dass**

    - auschließlich von der sendenden Station (SS) bei Ausbleiben der empfängerseitigen Bestätigung eine erneute Übertragung der Daten (D) zu der empfangenden Station (RS) gesteuert wird.

3. Verfahren nach Anspruch 1 oder 2, bei dem zumindest eine der Relaisstationen (HS2) die von der sendenden Station (SS) empfangenen Daten (D) bezüglich einer Empfangsqualität prüft, und die Daten (D) für den Fall einer nicht ausreichenden Empfangsqualität nicht zu der empfangenden Station (RS) weiterleitet, und für den Fall einer ausreichenden Empfangsqualität die Daten (D) zu der empfangenden Station (RS) weiterleitet.

4. Verfahren nach einem vorstehenden Anspruch, bei dem die Übertragung der Daten (D) nur über eine der zumindest zwei Relaisstationen (HS1,HS3) vorgenommen wird, welche die Daten (D) mit einer ausreichenden Empfangsqualität von der sendenden Station (SS) empfangen hat.

**5.** Verfahren nach Anspruch 3 oder 4, bei dem in zumindest einer der Relaisstationen (HS2,HS3) vor der Weiterleitung empfangener Daten (D) zur Erkennung der ausreichend gut oder unzureichend empfangenen Daten Fehlerkorrekturverfahren oder Fehlererkennungsverfahren angewendet werden.

**6.** Verfahren nach einem vorstehenden Anspruch, bei dem zumindest in einer der Relaisstation (HS2) die Weiterleitung empfangener Daten (D) abhängig von einer bestimmten eigenen Empfangsqualität und abhängig von von zumindest einer weiteren der Relaisstation (HS3) empfangenen Empfangsqualitätsinformationen durchgeführt oder nicht durchgeführt wird.

**7.** Verfahren nach einem vorstehenden Anspruch, bei dem die sendende Station (SS), die empfangende Station (RS) und zumindest ein Teil der Relaisstationen (HS1-HS3) zu einem Funk-Kommunikationssystem (MHSFN) gehören, welches auf einer einzelnen Frequenz kommuniziert.

**8.** Verfahren nach einem vorstehenden Anspruch, bei dem die Weiterleitung der Daten (D) über verschiedene parallele Wege, die über verschiedene Relaisstationen (HS1;HS2;HS3) ausgebildet werden, erfolgt, wobei die Daten (D) in den Relaisstationen verarbeitet, insbesondere verzerrt und/oder entzerrt, decodiert und/oder codiert werden.

**9.** Verfahren nach einem vorstehenden Anspruch, bei dem die parallel über verschiedene Wege übertragenen Daten (D) empfängerseitig überlagert empfangen und gemeinsam verarbeitet werden.

**10.** Kommunikationssystem (MHSFN), zumindest aufweisend eine sendende Station (SS), zumindest zwei Relaisstationen (HS1,HS2,HS) sowie eine empfangende Station (RS), und wobei

- die empfangende Station (RS) zumindest Mittel aufweist zum Empfangen von von der sendenden Station (SS) über die zumindest zwei Relaisstationen (HS1,HS2,HS) übertragenen Daten (D) sowie Mittel zum Senden einer Anforderung (ACK) zu der sendenden Station (SS) zur erneuten Übertragung der Daten (D) bei einer unzureichenden Übertragung,

**dadurch gekennzeichnet, daß**

- die sendende Station (SS) zumindest Mittel aufweist zum Steuern einer erneuten Übertragung der Daten (D) über die zumindest zwei Relaisstationen (HS1,HS2,HS) zu der empfangenden Station (RS) auf Grund der empfängerseitigen Anforderung, und
- ausschließlich die empfangende Station (RS) Mittel aufweist zum Senden einer Anforderung (ACK) zu der sendenden Station (SS) zur erneuten Übertragung der Daten (D) bei einer unzureichenden Übertragung.

**11.** Kommunikationssystem (MHSFN), zumindest aufweisend eine sendende Station (SS), zumindest zwei Relaisstationen (HS1,HS2,HS) sowie eine empfangende Station (RS), und wobei

- die empfangende Station (RS) zumindest Mittel aufweist zum Empfangen von von der sendenden Station (SS) über die zumindest zwei Relaisstationen (HS1,HS2,HS) übertragenen Daten (D) sowie Mittel zum Senden einer Anforderung (ACK) zu der sendenden Station (SS) zur erneuten Übertragung der Daten (D) bei einer unzureichenden Übertragung, und wobei
- die sendende Station (SS) zumindest Mittel aufweist zum Steuern einer erneuten Übertragung der Daten (D) über die zumindest zwei Relaisstationen (HS1,HS2,HS) zu der empfangenden Station (RS) bei einer unzureichenden Übertragung aufgrund eines Ausbleibens einer empfängerseitigen Bestätigung,

**dadurch gekennzeichnet, daß**

- ausschließlich die sendende Station (SS) Mittel aufweist zum Steuern einer erneuten Übertragung der Daten (D) zu der empfangenden Station (RS) bei einer unzureichenden Übertragung aufgrund eines Ausbleibens einer empfängerseitigen Bestätigung.

**12.** Kommunikationssystem (MHSFN) nach Anspruch 10 oder 11, wobei die zumindest zwei Relaisstationen (HS1,HS2,HS) jeweils aufweisen

- eine Empfangseinrichtung (R) zum Empfangen von weiterzuleitenden Daten (D) von der sendenden Station (SS),

- eine Analyseeinrichtung (A) zum Analysieren dieser Daten (D) bezüglich deren Empfangsqualität, und
- eine Sendeeinrichtung (S) zum Weiterleiten der Daten (D) zu der empfangenden Sation (RS) abhängig von dem Ergebnis in der Analyseeinrichtung (A).

**Revendications**

1. Procédé pour transmettre des données (D) dans un système de radiocommunication (MHSFN), dans lequel

   - les données (D) sont transmises d'une station émettrice (SS) à une station réceptrice (RS) des données (D) par l'intermédiaire d'au moins deux stations relais (HS1, HS2, HS) recevant et transférant chacune les données,

   **caractérisé en ce que**

   - dans le cas d'une transmission insuffisante, les données (D) sont transmises à nouveau par la station émettrice (SS) suite à une demande (ACK) de la part du récepteur, et
   - la demande est générée exclusivement par la station réceptrice (RS) et envoyée à la station émettrice (SS).

2. Procédé pour transmettre des données (D) dans un système de radiocommunication (MHSFN), dans lequel

   - les données (D) sont transmises d'une station émettrice (SS) à une station réceptrice (RS) des données (D) par l'intermédiaire d'au moins deux stations relais (HS1, HS2, HS) recevant et transférant chacune les données, et
   - dans le cas d'une transmission insuffisante, les données (D) sont transmises à nouveau en l'absence d'une confirmation de la part du récepteur,

   **caractérisé en ce que**

   - en l'absence de la confirmation de la part du récepteur, une nouvelle transmission des données (D) vers la station réceptrice (RS) est exclusivement commandée par la station émettrice (SS).

3. Procédé selon la revendication 1 ou 2, dans lequel au moins une des stations relais (HS2) vérifie les données (D) reçues de la station émettrice (SS) en termes de qualité de réception et, dans le cas d'une qualité de réception insuffisante, renonce au transfert des données (D) vers la station réceptrice (RS) et, dans le cas d'une qualité de réception suffisante, procède au transfert des données (D) vers la station réceptrice (RS).

4. Procédé selon une revendication précédente, dans lequel la transmission des données (D) n'est opérée que par l'une desdites au moins deux stations relais (HS1, HS3), laquelle a reçu les données (D) de la station émettrice (SS) avec une qualité de réception suffisante.

5. Procédé selon la revendication 3 ou 4, dans lequel dans au moins l'une des stations relais (HS2, HS3), avant le transfert de données (D) reçues et pour détecter les données reçues de manière suffisante ou insuffisante, des procédés de correction d'erreurs ou des procédés de détection d'erreurs sont appliqués.

6. Procédé selon une revendication précédente, dans lequel au moins dans une station relais (HS2), le transfert de données (D) reçues est opéré ou non en fonction d'une certaine qualité de réception propre et en fonction d'informations relative à la qualité de transmission, reçues d'au moins une autre station relais (HS3).

7. Procédé selon une revendication précédente, dans lequel la station émettrice (SS), la station réceptrice (RS) et au moins une partie des stations relais (HS1-HS3) appartiennent à un système de radiocommunication (MHSFN) communiquant sur une seule fréquence.

8. Procédé selon une revendication précédente, dans lequel le transfert des données (D) est opéré sur différentes voies parallèles, formées par différentes stations relais (HS1; HS2; HS3), les données (D) faisant l'objet d'un traitement dans les stations relais, notamment d'une distorsion et/ou égalisation, d'un décodage et/ou codage.

9. Procédé selon une revendication précédente, dans lequel les données (D), transmises en parallèle sur différentes voies, sont reçues à l'état superposé côté récepteur et traitées conjointement.

**10.** Système de communication (MHSFN) comprenant au moins une station émettrice (SS), au moins deux stations relais (HS1, HS2, HS) ainsi qu'une station réceptrice (RS), et dans lequel

- la station réceptrice (RS) comprend au moins des moyens pour recevoir des données (D) transmises par la station émettrice (SS) par l'intermédiaire desdites au moins deux stations relais (HS1, HS2, HS) ainsi que des moyens pour envoyer une demande (ACK) à la station émettrice (SS) en vue d'une nouvelle transmission des données (D) en cas de transmission insuffisante,

**caractérisé en ce que**

- la station émettrice (SS) comprend au moins des moyens pour commander une nouvelle transmission des données (D) par l'intermédiaire desdites au moins deux stations relais (HS1, HS2, HS) vers la station réceptrice (RS) suite à la demande de la part du récepteur, et **en ce que**
- seule la station réceptrice (RS) comprend des moyens pour envoyer une demande (ACK) à la station émettrice (SS) en vue d'une nouvelle transmission des données (D) en cas de transmission insuffisante.

**11.** Système de communication (MHSFN) comprenant au moins une station émettrice (SS), au moins deux stations relais (HS1, HS2, HS) ainsi qu'une station réceptrice (RS), et dans lequel

- la station réceptrice (RS) comprend au moins des moyens pour recevoir des données (D) transmises par la station émettrice (SS) par l'intermédiaire desdites au moins deux stations relais (HS1, HS2, HS) ainsi que des moyens pour envoyer une demande (ACK) à la station émettrice (SS) en vue d'une nouvelle transmission des données (D) en cas de transmission insuffisante, et dans lequel
- la station émettrice (SS) comprend au moins des moyens pour commander une nouvelle transmission des données (D) par l'intermédiaire desdites au moins deux stations relais (HS1, HS2, HS) vers la station réceptrice (RS) en cas de transmission insuffisante suite à l'absence d'une confirmation de la part du récepteur,

**caractérisé en ce que**

- seule la station émettrice (SS) comprend des moyens pour commander une nouvelle transmission des données (D) vers la station réceptrice (RS) en cas de transmission insuffisante suite à l'absence d'une confirmation de la part du récepteur.

**12.** Système de communication (MHSFN) selon la revendication 10 ou 11, dans lequel lesdites au moins deux stations relais (HS1, HS2, HS) comprennent chacune

- un dispositif de réception (R) pour recevoir de la station émettrice (SS) des données (D) à transférer,
- un dispositif d'analyse (A) pour analyser ces données (D) quant à leur qualité de réception et
- un dispositif d'émission (S) pour transférer les données (D) vers la station réceptrice (RS) en fonction du résultat obtenu dans le dispositif d'analyse (A).

**Claims**

**1.** Method for transmitting data (D) in a radio communication system (MHSFN), wherein

- the data (D) is transmitted by a transmitting station (SS) to a receiving station (RS) receiving said data (D) via at least two relay stations (HS1,HS2,HS) in each case receiving and forwarding the data,

**characterised in that**

- in the event of an unsatisfactory transmission the data (D) is retransmitted by the transmitting station (SS) as a result of a request (ACK) from the receiver side, and
- the request is generated only by the receiving station (RS) and sent to the transmitting station (SS).

**2.** Method for transmitting data (D) in a radio communication system (MHSFN), wherein

- the data (D) is transmitted by a transmitting station (SS) to a receiving station (RS) receiving said data (D) via at least two relay stations (HS1,HS2,HS) in each case receiving and forwarding the data, and
- in the event of an unsatisfactory transmission the data (D) is retransmitted due to the absence of an acknowledgement from the receiver side,

**characterised in that**

- a retransmission of the data (D) to the receiving station (RS) is controlled exclusively by the transmitting station (SS) in the event of the absence of the acknowledgement from the receiver side.

3. Method according to claim 1 or 2, wherein
at least one of the relay stations (HS2) checks the data (D) received from the transmitting station (SS) with regard to reception quality and if the reception quality is not satisfactory does not forward said data (D) to the receiving station (RS), and if the reception quality is satisfactory does forward said data (D) to the receiving station (RS).

4. Method according to a preceding claim, wherein
the data (D) is only transmitted via one of the at least two relay stations (HS1,HS3) which has received the data (D) from the transmitting station (SS) with a satisfactory reception quality.

5. Method according to claim 3 or 4, wherein
error correction methods or error detection methods are applied in at least one of the relay stations (HS2,HS3) prior to the forwarding of received data (D) for the purpose of detecting the data which has been received sufficiently well or unsatisfactorily.

6. Method according to a preceding claim, wherein
in at least one of the relay stations (HS2) the forwarding of received data (D) is carried out or not carried out depending on a specific own reception quality and depending on information about reception quality received from at least another of the relay stations (HS3).

7. Method according to a preceding claim, wherein
the transmitting station (SS), the receiving station (RS) and at least some of the relay stations (HS1-HS3) belong to a radio communication system (MHSFN) communicating on a single frequency.

8. Method according to a preceding claim, wherein
the data (D) is forwarded over different parallel paths embodied via different relay stations (HS1;HS2;HS3), with said data (D) being processed, in particular preemphasised and/or deemphasised, decoded and/or encoded, in the relay stations.

9. Method according to a preceding claim, wherein
the data (D) transmitted in parallel over different paths is received overlaid on the receiver side and processed collectively.

10. Communication system (MHSF) having at least one transmitting station, at least two relay stations (HS1,HS2,HS) and a receiving station (RS), and wherein

- the receiving station (RS) has at least means for receiving data (D) transmitted by the transmitting station (SS) via the at least two relay stations (HS1,HS2,HS) as well as means for sending a request (ACK) to the transmitting station (SS) for retransmission of the data (D) in the event of an unsatisfactory transmission,

**characterised in that**

- the transmitting station (SS) has at least means for controlling a retransmission of the data (D) via the at least two radio stations (HS1,HS2,HS) to the receiving station (RS) as a result of the request from the receiver side, and
- only the receiving station (RS) has means for sending a request to the transmitting station (SS) for retransmission of the data (D) in the event of an unsatisfactory transmission.

11. Communication system (MHSF) having at least one transmitting station, at least two relay stations (HS1,HS2,HS) and a receiving station (RS), and wherein

- the receiving station (RS) has at least means for receiving data (D) transmitted by the transmitting station (SS) via the at least two relay stations (HS1, HS2, HS) as well as means for sending a request (ACK) to the transmitting station (SS) for retransmission of the data (D) in the event of an unsatisfactory transmission, and wherein
- the transmitting station (SS) has at least means for controlling a retransmission of the data (D) to the receiving station (RS) via the at least two radio stations (HS1, HS2, HS) in the event of an unsatisfactory transmission due to the absence of an acknowledgement from the receiver side,

**characterised in that**

- in the event of an unsatisfactory transmission only the transmitting station (SS) has means for controlling a retransmission of the data (D) to the receiving station (SS) due to the absence of an acknowledgement from the receiver side.

12. Communication system (MHSF) according to claim 10 or 11, wherein the at least two relay stations (HS1,HS2,HS) each have

- a receiving device (R) for receiving data (D) requiring to be forwarded from the transmitting station (SS),
- an analysing device (A) for analysing said data (D) with regard to its reception quality, and
- a transmitting device (S) for forwarding the data (D) to the receiving station (RS) depending on the result in the analysing device (A).

# FIG 1

# FIG 2